# EUROPÄISCHE PATENTSCHRIFT

(11) **EP 2 396 557 B1**
(45) Veröffentlichungstag und Bekanntmachung des Hinweises auf die Patenterteilung: **13.07.2016**
(21) Anmeldenummer: 10706489.1
(22) Anmeldetag: 28.01.2010
(51) Int. Cl.: F15B 15/28, B60T 17/22, F16D 25/08, F16D 25/12

(54) **HYDRAULISCHES KUPPLUNGS- ODER BREMSBETÄTIGUNGSSYSTEM**
HYDRAULIC CLUTCH OR BRAKE ACTUATING SYSTEM
SYSTÈME D'ACTIONNEMENT HYDRAULIQUE D'EMBRAYAGE OU DE FREIN

(30) Priorität: 12.02.2009 DE 102009008671
(43) Veröffentlichungstag der Anmeldung: 21.12.2011
(73) Patentinhaber: Schaeffler Technologies AG & Co. KG, 91074 Herzogenaurach (DE)
(72) Erfinder: DIETRICH, Markus, 77704 Oberkirch (DE); GRAMANN, Matthias, 77871 Renchen (DE); MESSMER, Benjamin, 79350 Sexau (DE)
(86) Internationale Anmeldenummer: PCT/DE2010/000088
(87) Internationale Veröffentlichungsnummer: WO 2010/091658

(56) Entgegenhaltungen:
- EP-A1- 0 554 678
- DE-A1- 19 915 832
- DE-A1-102005 029 494
- DE-A1-102007 003 384
- FR-A1- 2 741 401

## Beschreibung

Die Erfindung betrifft ein hydraulisches Kupplungs- oder Bremsbetätigungssystem, mit einem Zylinder, mit einem in einem Gehäuse des Zylinders axial beweglichen Kolben und mit einem Sensorsystem zur Sensierung der Stellung des Kolbens in dem Zylinder, wobei das Sensorsystem mindestens ein dem Kolben zuordenbares Signalelement und mindestens einen ortsfest angeordneten Sensor umfasst.

Zur Erfassung von Schaltpunkten oder zur Bestimmung der Kolbenposition von Geber- oder Nehmerzylindern in Kupplungen von Kraftfahrzeugen kommen in bekannter Weise Sensorsysteme zum Einsatz, die einen Sensor aufweisen, der mit einem entsprechenden Signalelement zusammenwirkt.

Das Signalelement ist dabei an dem Kolben befestigt, der die bewegliche Komponente des Geber- oder Nehmerzylinders darstellt, während der Sensor zur Erfassung der Lage des - beispielsweise von einem Magneten gebildeten - Signalelementes in Bezug zum Kolben an dem feststehenden Zylindergehäuse angeordnet bzw. in dieses integriert ist.

Aus DE 203 15 735 U1 ist eine Vorrichtung zur Sensierung der axialen Stellung eines von zwei zueinander bewegbaren Bauteilen bezüglich des anderen Bauteils bekannt. Dabei sind ein magnetisches Signalelement an dem Kolben und ein magnetfeldempfindlicher Sensor in einem am Gehäuse eines Geber- oder Nehmerzylinders befestigten Sensorgehäuse angeordnet. Das Sensorgehäuse wird mittels Schrauben an entsprechenden Befestigungsflanschen angeschraubt. Diese Verbindungsart ist aufwendig, benötigt einen relativ großen Bauraum und gewährleistet keine lagesichere Befestigung des Sensorgehäuses am Gehäuse des Geber- oder Nehmerzylinders, da sich die beiden Schraubverbindungen bei mechanischer Beanspruchung lösen können. Weiterhin kann es durch die beiden an sich gegenüberliegenden Gehäuseenden und an unterschiedlichen Gehäuseseiten angreifenden Schraubverbindungen zum Verzug des Sensorgehäuses kommen.

Nachteilig ist auch, dass bei der Montage eine Schnittstelle entsteht, an der zwei Gehäuseteile aufeinander montiert werden. Somit vergrößert sich der Luftspalt zwischen Sensorelement (im Sensorgehäuse) und zu sensierendes Objekt (im bzw. am Kolben des Zylinders). Je größer der Abstand ist, desto ungenauer werden die Messsignale bzw. desto schwieriger wird es, die Sensierung überhaupt durchführen zu können.

Auch weitere Lösungen des Standes der Technik mit einem Sensorsystem zur Bestimmung der Position bzw. des Hubes des Kolbens eines Hydraulikzylinders weisen Sensoren auf, die in einem Sensorgehäuse angeordnet sind, welches in ähnlicher Art und Weise an der Außenseite des Zylindergehäuses eines Hydraulikzylinders befestigt ist (beispielsweise DE 199 158 32 A1, DE 202 085 68U1, DE 102 42 841 A1, DE 103 23 797 B4, DE 10 2007 034 900 A1).

Der Nachteil der angeführten Lösungen des Standes der Technik mit einem separaten, an der Außenseite des Zylindergehäuses befestigten Sensorgehäuse besteht neben den weiter oben aufgezeigten Nachteilen vor allem darin, dass zusätzlicher Bauraum benötigt wird. Eine vorgenommene Bauraumeinsparung bei der Befestigung des Sensors geht meist zu Lasten der Sensorgenauigkeit.

Andere Lösungen des Standes der Technik verwenden Drosselglieder zur Detektierung der Kolbenstellung (beispielsweise DE 43 34 551 C2, DE 10 2004 062 554 A1), die allerdings relativ störanfällig gegenüber äußeren Einflüssen sind und somit ein begrenztes Einsatzgebiet aufweisen,

Ein System gemäß dem Oberbegriff des Anspruchs 1 ist aus DE 10 2005 029 494 bekannt.

Aufgabe der Erfindung ist es, ein hydraulisches Kupplungs- oder Bremsbetätigungssystem zu schaffen, bei welchem das eingesetzte Sensorsystem bei einfachem konstruktiven Aufbau und großer Messgenauigkeit keinen zusätzlichen Bauraum benötigt.

Diese Aufgabe wird mit einem hydraulischen Kupplungs- oder Bremsbetätigungssystem mit den Merkmalen des ersten Patentanspruchs gelöst. Vorteilhafte und/oder zweckmäßige Weiterbildungen sind Gegenstand der Unteransprüche und werden nachfolgend näher beschrieben.

Ausgehend von dem im Oberbegriff des ersten Patentanspruchs angegebenen hydraulischen Kupplungs- oder Bremsbetätigungssystem ist erfindungsgemäß vorgesehen, dass der Sensor in/an einer Ausstülpung des Gehäuses angeordnet ist, welche in eine stirnseitig in dem Kolben vorhandene Ausnehmung hineinragt. Der Sensor ist hierbei in einem von der Ausstülpung vollständig oder teilweise umschlossenen Hohlraum angeordnet. Die hohlellipsenförmig ausgebildete Ausstülpung weist einen kolbenseitig angeordneten Boden und eine von dem Kolben wegweisende Öffnung auf. Durch diese Ausstülpung wird der Kolben und damit auch der Magnet vor Rotation gesichert. Diese Fixierung hat zur Folge, dass der Magnetisierungsfehler keinen Einfluss auf die Sensorgenauigkeit hat und dadurch auch ein kostengünstiger Stabmagnet als signalgebendes Element zum Einsatz kommen kann.

Die Ausstülpung und die Ausnehmung des Kolbens sind konzentrisch zu einer Längsachse des Zylinders angeordnet sind.

Vorteilhafter Weise ist der Sensor auf/an einer in den Hohlraum der Ausstülpung hineinragenden Platine angeordnet, wobei die Platine oder auch ein Stanzgitter in eine separate, den Hohlraum der Ausstülpung verschließende Platte integriert und/oder mit dieser verbunden ist.

Alternativ kann die Platine in die Ausstülpung integriert und/oder mit dieser verbunden sein.

In einer bevorzugten Ausführung ist die Platine koaxial zu der Längsachse angeordnet.

Dabei kann die Platte unlösbar oder lösbar mit dem Gehäuse und/oder mit der Ausstülpung verbunden sein. Die orthogonal zu der Längsachse angeordnete Platte dient vorteilhafterweise als Steckbereich für einen die Verbindung mit einer elektronischen Auswerteeinrichtung herstellenden Stecker.

Die Ausstülpung kann mit dem Gehäuse einteilig aus Kunststoff durch Spritzgießen oder alternativ einteilig aus metallischem Werkstoff im Druckgussverfahren hergestellt sein. Das an dem Kolben angeordnete, mit dem Sensor in Wirkverbindung stehende, Signalelement kann in einer vorteilhaften Ausgestaltung der Erfindung auch als Verdrehsicherung für den Kolben gegenüber dem Gehäuse des Zylinders dienen.

Die Erfindung wird nachfolgend anhand eines Ausführungsbeispiels und zugehöriger Zeichnung näher erläutert. Es zeigt:
- Figur:: Längsschnitt eines Geberzylinders eines hydraulischen Kupplungs- oder Bremsbetätigungssystems.

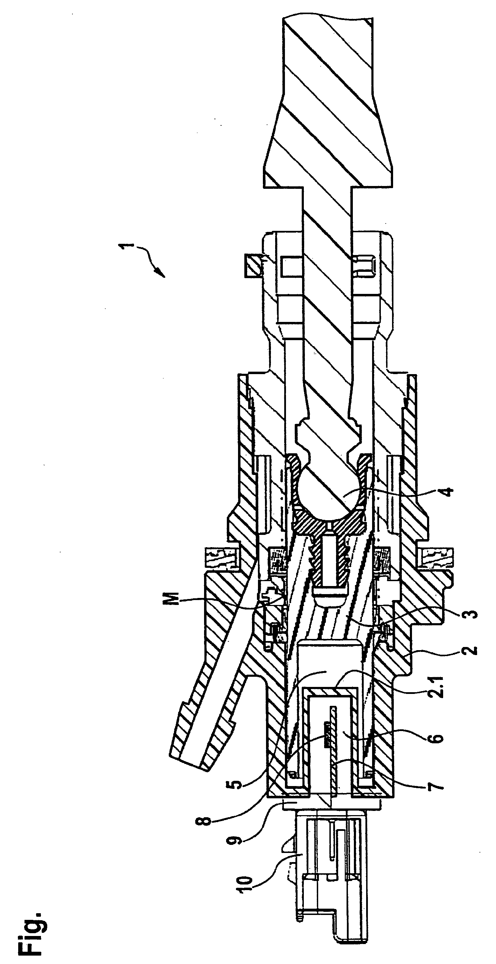

In der Figur ist ein Längsschnitt eines Zylinders 1 eines hydraulischen Kupplungs- oder Bremsbetätigungssystems dargestellt. Der Zylinder 1 wird hier durch einen Geberzylinder gebildet. Der Geberzylinder 1 weist ein Gehäuse 2 als feststehende Komponente auf, in dem ein Kolben 3 entlang einer Längsachse A axial verschiebbar gelagert ist. Eine hier nur angedeutete Kolbenstange 4 ist mit dem Kolben 3 schwenkbeweglich gekoppelt.

An der Stirnseite - an seinem der Kolbenstange 4 entgegen gesetzten Ende - weist der Kolben 3 eine ellipsenförmige Ausnehmung 5 auf, die in Form einer konzentrisch zu der Längsachse A verlaufenden Sackbohrung ausgeführt ist.

In die ellipsenförmige Ausnehmung 5 des Kolbens 3 ragt eine Ausstülpung 2.1 des Gehäuses 2 hinein. Die Ausstülpung 2.1 stellt hierbei eine Auswölbung des Bodens des Gehäuses 2 dar, die in hohlzylindrischer Gestalt in die stirnseitige Ausnehmung 5 des Kolbens 3 hineinreicht, ohne die Innenwände der Ausnehmung 5 zu berühren. Seitenwand und Boden des von der Ausstülpung 2.1 gebildeten Hohlraums 6 verlaufen beabstandet und vorzugsweise parallel zu der Seitenwand bzw. dem Boden der Ausnehmung 5 des Kolbens 3.

In den Hohlraum 6 der Ausstülpung 2.1 ragt in axialer Richtung eine Platine 7 hinein, die mit einem Sensor 8 versehen ist. Die Platine 7 ist hier an einer orthogonal zu der Längsachse A und damit auch zu der Bewegungsrichtung des Kolbens 3 angeordneten, den Hohlraum 6 verschließenden, Platte 9 befestigt. Die mit dem Teil des Bodens des Gehäuses 2, der sich radial außen an die Ausstülpung 2.1 anschließt, verbundene Platte 9 kann beispielsweise als Steckbereich für den Anschluss eines die Verbindung des Sensors 8 mit einer elektronischen Auswerteeinrichtung herstellenden Steckers 10 dienen. Alternativ ist eine Befestigung der Platine 7 an der Ausstülpung 2.1 des Gehäuses 2 möglich.

Die Verbindung der Platte 9 mit dem Gehäuse 2 kann lösbar oder unlösbar hergestellt werden. Die Ausstülpung 2.1 wird mit dem Gehäuse 2 vorzugsweise einteilig aus Kunststoff durch Spritzgießen hergestellt. Alternativ kann die Ausstülpung 2.1 mit dem Gehäuse 2 einteilig aus metallischem Werkstoff im Druckgussverfahren hergestellt werden.

Der Sensor 8 steht in an sich bekannter Art und Weise mit einem am Kolben 3 angeordneten und hier nicht näher beschriebenen Signalelement M in Wirkverbindung. Dabei kann das Signalelement M beispielsweise von einem Magneten gebildet sein, der mit dem magnetfeldempfindlichen Sensor 8 zusammenwirkt. Dabei bildet die Ausstülpung 2.1 des Gehäuses 2 des Zylinders 1 innerhalb des Kolbens 3 eine Art Sensorgehäuse, das aber keinen zusätzlichen Bauraum beansprucht. Der Sensor 8 ist gegen äußere Einflüsse geschützt und befindet sich in einem relativ geringen Abstand zu dem Signalelement M. Somit ist eine gute Messgenauigkeit gesichert.

Weiterhin ist eine Verdrehsicherung zwischen dem Kolben 3 und dem Gehäuse 2 des Zylinders 1 vorgesehen, die hier aber nicht näher beschrieben wird. Diese Verdrehsicherung kann beispielsweise von dem an dem Außendurchmesser des Kolbens 3 angebrachten Signalelement M verwirklicht werden, das in einer an dem Innendurchmesser des Gehäuses 2 befindlichen Längsnut während der axialen Bewegung des Kolbens 3 geführt wird, wobei die Ausstülpung 2.1 zentrisch und damit ellipsenförmig angeordnet ist.

Durch die Ausbildung einer derartigen Verdrehsicherung sind größere Messgenauigkeiten erzielbar, ohne dass zusätzliche Bauteile benötigt werden. Auch kann Material für den das Signalelement M eingespart werden, da dieser im Falle eines Kolbens 3 ohne Verdrehsicherung umlaufend im Kolben 3 angeordnet werden müsste.

Die Wirkungsweise der beschriebenen Anordnung des Sensorsystems ist folgende: Das als Magnet ausgebildete Signalelement M führt mit dem Kolben 3 eine Axialbewegung aus. Dadurch wird in dem Sensor 8, der ortsfest an der Platine 7 innerhalb des Kolbens 3 angeordnet ist, eine Änderung des magnetischen Feldes hervorgerufen und somit ein Signal erzeugt, wodurch die Bewegung des Kolbens 3 bzw. dessen Stellung signalisiert wird. Die Signale werden vom Sensor 8 an eine - hier nicht dargestellte - elektronische Auswerteeinrichtung übertragen, wodurch die durch den Kolben 3 zurückgelegte axiale Entfernung und somit seine axiale Position bestimmbar ist.

Mit der erfindungsgemäßen Lösung wird eine überraschend einfache, kostengünstige und Platz sparende Lösung der Integration des Sensorsystems geschaffen. Es ist kein separates Sensorgehäuse erforderlich, welches aufwendig am Gehäuse befestigt werden muss bzw. welches zu Lasten der Messgenauigkeit eine Bauraumverringerung erfährt. Zudem besteht bei der erfindungsgemäßen Anordnung des Sensors 8 eine geringe Störanfälligkeit bei einer hohen Genauigkeit.

### Bezugszeichenliste

- 1: Zylinder/Geberzylinder
- 2: Gehäuse
- 2.1: Ausstülpung
- 3: Kolben
- 4: Kolbenstange
- 5: Ausnehmung
- 6: Hohlraum
- 7: Platine
- 8: Sensor
- 9: Platte
- 10: Stecker
- A: Längsachse
- M: Signalelement

## Patentansprüche

1. Hydraulisches Kupplungs- oder Bremsbetätigungssystem, mit einem Zylinder (1), mit einem in einem Gehäuse (2) des Zylinders (1) axial beweglichen Kolben (3) und mit einem Sensorsystem zur Sensierung der Stellung des Kolbens (3) in dem Zylinder (1), wobei das Sensorsystem mindestens ein dem Kolben (3) zuordenbares Signalement (M) und mindestens einen ortsfest angeordneten Sensor (8) umfasst, wobei der Sensor (8) in/an einer Ausstülpung (2.1) des Gehäuses (2) angeordnet ist, welche in eine stirnseitig in dem Kolben (3) vorhandene Ausnehmung (5) hineinragt, **dadurch gekennzeichnet, dass** die Ausstülpung (2.1) hohlellipsenförmig und die Ausnehmung ellipsenförmig (5) ausgebildet ist.

2. Hydraulisches Kupplungs- oder Bremsbetätigungssystem nach Anspruch 1, **dadurch gekennzeichnet, dass** der Sensor (8) in einem von der Ausstülpung (2.1) vollständig oder teilweise umschlossenen Hohlraum (6) angeordnet ist.

3. Hydraulisches Kupplungs- oder Bremsbetätigungssystem nach Anspruch 1 oder 2, **dadurch gekennzeichnet, dass** die hohlellipsenfömig ausgebildete Ausstülpung (2.1) einen kolbenseitig angeordneten Boden und eine von dem Kolben (3) wegweisende Öffnung aufweist.

4. Hydraulisches Kupplungs- oder Bremsbetätigungssystem nach Anspruch 2 oder 3, **dadurch gekennzeichnet, dass** die Ausstülpung (2.1) des Gehäuses (2) und die Ausnehmung (5) des Kolbens (3) konzentrisch zu einer Längsachse (A) des Zylinders (1) angeordnet sind.

5. Hydraulisches Kupplungs- oder Bremsbetätigungssystem nach einem der Ansprüche 2 bis 4, **dadurch gekennzeichnet, dass** der Sensor (8) auf/an einer in den Hohlraum (6) der Ausstülpung (2.1) hineinragenden Platine (7) angeordnet ist.

6. Hydraulisches Kupplungs- oder Bremsbetätigungssystem nach Anspruch 5, **dadurch gekennzeichnet, dass** die Platine (7) in die Ausstülpung (2.1) integriert und/oder mit dieser verbunden ist.

7. Hydraulisches Kupplungs- oder Bremsbetätigungssystem nach Anspruch 5, **dadurch gekennzeichnet, dass** die Platine (7) in eine separate, den Hohlraum (6) der Ausstülpung (2.1) verschließende, Platte (9) integriert und/oder mit dieser verbunden ist.

8. Hydraulisches Kupplungs- oder Bremsbetätigungssystem nach einem der Ansprüche 5 bis 7, **dadurch gekennzeichnet, dass** die Platine (7) koaxial zu der Längsachse (A) angeordnet ist.

9. Hydraulisches Kupplungs- oder Bremsbetätigungssystem nach Anspruch 7 oder 8, **dadurch gekennzeichnet, dass** die Platte (9) unlösbar oder lösbar mit dem Gehäuse (2) und/oder mit der Ausstülpung (2.1) verbunden ist.

10. Hydraulisches Kupplungs- oder Bremsbetätigungssystem nach einem der Ansprüche 7 bis 9, **dadurch gekennzeichnet, dass** die orthogonal zu der Längsachse (A) angeordnete Platte (9) als Steckbereich für einen die Verbindung mit einer elektronischen Auswerteeinrichtung herstellenden Stecker (10) dient.

## Claims

1. Hydraulic clutch or brake actuating system, having a cylinder (1), having a piston (3) which is axially movable in a housing (2) of the cylinder (1), and having a sensor system for sensing the position of the piston (3) in the cylinder (1), wherein the sensor system comprises at least one signal element (M) which can be assigned to the piston (3), and at least one fixedly arranged sensor (8), wherein the sensor (8) is arranged in/on a protrusion (2.1) of the housing (2), which protrusion (2.1) projects into a recess (5) present on the end side of the piston (3), **characterized in that** the protrusion (2.1) is formed with a hollow ellipsoidal shape and the recess is formed with an ellipsoidal shape (5).

2. Hydraulic clutch or brake actuating system according to Claim 1, **characterized in that** the sensor (8) is arranged in a cavity (6) which is completely or partially enclosed by the protrusion (2.1).

3. Hydraulic clutch or brake actuating system according to Claim 1 or 2, **characterized in that** the protrusion (2.1) which is formed with a hollow ellipsoidal shape has a base which is arranged on the piston side and an opening which points away from the piston (3).

4. Hydraulic clutch or brake actuating system according to Claim 2 or 3, **characterized in that** the protrusion (2.1) of the housing (2) and the recess (5) of the piston (3) are arranged concentrically with respect to a longitudinal axis (A) of the cylinder (1).

5. Hydraulic clutch or brake actuating system according to one of Claims 2 to 4, **characterized in that** the sensor (8) is arranged on/at a circuit board (7) which projects into the cavity (6) of the protrusion (2.1).

6. Hydraulic clutch or brake actuating system according to Claim 5, **characterized in that** the circuit board (7) is integrated into the protrusion (2.1) and/or is connected thereto.

7. Hydraulic clutch or brake actuating system according to Claim 5, **characterized in that** the circuit board (7) is integrated into a separate plate (9) which closes off the cavity (6) of the protrusion (2.1) and/or is connected thereto.

8. Hydraulic clutch or brake actuating system according to one of Claims 5 to 7, **characterized in that** the circuit board (7) is arranged coaxially with respect to the longitudinal axis (A).

9. Hydraulic clutch or brake actuating system according to Claim 7 or 8, **characterized in that** the plate (9) is non-detachably or detachably connected to the housing (2) and/or to the protrusion (2.1).

10. Hydraulic clutch or brake actuating system according to one of Claims 7 to 9, **characterized in that** the plate (9) which is arranged orthogonally with respect to the longitudinal axis (A) serves as a plug-in region for a plug (10) which brings about the connection to an electronic evaluation device.

## Revendications

1. Système d'actionnement hydraulique d'embrayage ou de frein comprenant un cylindre (1) avec un piston (3) déplaçable axialement dans un boîtier (2) du cylindre (1) et un système de capteur pour détecter la position du piston (3) dans le cylindre (1), le système de capteur comprenant au moins un élément de signal (M) pouvant être associé au piston (3) et au moins un capteur (8) disposé fixement, le capteur (8) étant disposé dans/sur un renfoncement (2.1) du boîtier (2) qui pénètre dans un évidement (5) prévu du côté frontal dans le piston (3), **caractérisé en ce que** le renfoncement (2.1) est réalisé en forme d'ellipse creuse et l'évidement est réalisé en forme d'ellipse (5).

2. Système d'actionnement hydraulique d'embrayage ou de frein selon la revendication 1, **caractérisé en ce que** le capteur (8) est disposé dans une cavité (6) entourée complètement ou partiellement par le renfoncement (2.1).

3. Système d'actionnement hydraulique d'embrayage ou de frein selon la revendication 1 ou 2, **caractérisé en ce que** le renfoncement réalisé en forme d'ellipse creuse (2.1) présente un fond disposé du côté du piston et une ouverture orientée à l'opposé du piston (3).

4. Système d'actionnement hydraulique d'embrayage ou de frein selon la revendication 2 ou 3, **caractérisé en ce que** le renfoncement (2.1) du boîtier (2) et l'évidement (5) du piston (3) sont disposés concentriquement par rapport à un axe longitudinal (A) du cylindre (1).

5. Système d'actionnement hydraulique d'embrayage ou de frein selon l'une quelconque des revendications 2 à 4, **caractérisé en ce que** le capteur (8) est disposé sur/contre une platine (7) pénétrant dans la cavité (6) du renfoncement (2.1).

6. Système d'actionnement hydraulique d'embrayage ou de frein selon la revendication 5, **caractérisé en ce que** la platine (7) est intégrée dans le renfoncement (2.1) et/ou est connectée à celui-ci.

7. Système d'actionnement hydraulique d'embrayage ou de frein selon la revendication 5, **caractérisé en ce que** la platine (7) est intégrée dans une plaque séparée (9) fermant la cavité (6) du renfoncement (2.1) et/ou est connectée à celle-ci.

8. Système d'actionnement hydraulique d'embrayage ou de frein selon l'une quelconque des revendications 5 à 7, **caractérisé en ce que** la platine (7) est disposée coaxialement par rapport à l'axe longitudinal (A).

9. Système d'actionnement hydraulique d'embrayage ou de frein selon la revendication 7 ou 8, **caractérisé en ce que** la plaque (9) est connectée de manière inamovible ou de manière amovible au boîtier (2) et/ou au renfoncement (2.1).

10. Système d'actionnement hydraulique d'embrayage ou de frein selon l'une quelconque des revendications 7 à 9, **caractérisé en ce que** la plaque (9) disposée perpendiculairement à l'axe longitudinal (A) sert de région d'enfichage pour une fiche (10) établissant la connexion avec un dispositif d'analyse électronique.
